# EUROPÄISCHE PATENTSCHRIFT

(11) **EP 0 920 611 B1**
(45) Veröffentlichungstag und Bekanntmachung des Hinweises auf die Patenterteilung: **30.06.2004**
(21) Anmeldenummer: 98928140.7
(22) Anmeldetag: 04.04.1998
(51) Int. Cl.: G01M 3/32

(54) **DIAGNOSEMODUL ZUR PRÜFUNG DER DICHTHEIT EINES BEHÄLTERS**
DIAGNOSTIC MODULE FOR TESTING THE TIGHTNESS OF A CONTAINER
MODULE DE DIAGNOSTIC POUR CONTROLER L'ETANCHEITE D'UN CONTENANT

(30) Priorität: 23.06.1997 DE 19726559
(43) Veröffentlichungstag der Anmeldung: 09.06.1999
(73) Patentinhaber: ROBERT BOSCH GMBH, 70442 Stuttgart (DE)
(72) Erfinder: SCHWEGLER, Helmut, D-74385 Pleidelsheim (DE); ZIMMERMANN, Manfred, D-74906 Bad Rappenau (DE)
(86) Internationale Anmeldenummer: PCT/DE1998/000965
(87) Internationale Veröffentlichungsnummer: WO 1998/059230

(56) Entgegenhaltungen:
- DE-A- 4 413 145
- DE-C- 19 502 776
- US-A- 4 491 106

## Beschreibung

### Stand der Technik

Die Erfindung betrifft ein Diagnosemodul zur Prüfung der Dichtheit eines Behältnisses, insbesondere einer Tankentlüftungsanlage eines Kraftfahrzeugs, der im Oberbegriff des Anspruchs 1 definierten Gattung.

Behältnisse müssen in den unterschiedlichsten Bereichen der Technik auf Funktionsfähigkeit, d.h. auf Dichtheit, geprüft werden. So ist es beispielsweise in der chemischen Industrie oder in der Verfahrenstechnik von Bedeutung, die Dichtheit von Behältnissen zu überprüfen. Darüber hinaus ist es aber auch in der Fahrzeugtechnik notwendig, die Dichtheit von Behältnissen, insbesondere von Tankanlagen zu prüfen. So wird beispielsweise in einigen Ländern eine Überprüfung der Funktionsfähigkeit von Tankentlüftungsanlagen bei Kraftfahrzeugen mit bordeigenen Mitteln verlangt. Dabei müssen ab dem Modelljahr 1996 Lecks von einer Größe von 1 mm erkannt werden können, ab dem Modelljahr 2000 sogar von einer Größe von 0,5 mm. Zur Erkennung solcher Lecks wird ein sog. Diagnosemodul fest installiert, mit dem von Zeit zu Zeit eine Dichtheitsprüfung durchgeführt werden kann.

Es ist bereits vorgeschlagen worden, ein solches Diagnosemodul mit einer elektrischen Druckluftpumpe und einem z.B. als 4/2-Wegemagnetventil ausgebildeten Umschaltventil auszustatten und ventilseitig an das zu überwachende Behältnis bzw. die Tankentlüftungsanlage anzuschließen (DE 196 36 431). Das Umschaltventil sperrt in seiner ersten Schaltstellung die Druckluftzufuhr von der Druckluftpumpe und entlüftet die Verbindungsleitung zwischen Umschaltventil und Behältnis und verbindet in seiner zweiten Schaltstellung die Druckluftpumpe mit der Verbindungsleitung zum Behältnis unter gleichzeitiger Sperrung der Entlüftung. Das aus einer Drosselbohrung mit definiertem Bohrungsdurchmesser bestehende Referenzleck ist parallel zum Umschaltventil angeordnet und verbindet die Druckluftpumpe mit der Verbindungsleitung zwischen Umschaltventil und Behältnis. An dem elektrischen Anschluß der Druckluftpumpe ist eine Meßeinheit angeschlossen, die die Stromaufnahme der Druckluftpumpe als Maß für den von der Druckluftpumpe geförderten Volumenstrom mißt.

Zur Dichtheitsprüfung wird der Fördervolumenstrom der Druckluftpumpe ermittelt, und zwar einmal, wenn die Druckluftpumpe in der zweiten Schaltstellung des Umschaltventils das Behältnis beaufschlagt, und zum anderen, wenn die Druckluftpumpe in der ersten Schaltstellung des Umschaltventils nur das Referenzleck beaufschlagt. Ein Vergleich der beiden Größen ermöglicht die Aussage über ein Leck, das noch in der zulässigen Größe liegt oder darüber hinausgeht.

Bei diesem Diagnosemodul werden Bauteiltoleranzen und äußere Einflüsse, wie Temperatur, weitgehend ausgeschlossen, da der Vergleich der beiden Meßgrößen in Beziehung auf die Referenzmessung gemacht wird und während der Messung sich äußere Einflüsse nicht entscheidend verändern. Allerdings ist das Referenzleck für die korrekte Messung von größter Wichtigkeit, da es die Schwellgrenze für eine Gut/Schlecht-Erkennung der Dichtheit definiert. Es muß daher sichergestellt werden, daß sich der Querschnitt des Referenzlecks im Laufe der Zeit nicht verändert, beispielsweise durch Verschmutzung nicht kleiner wird. Da - wie eingangs beschrieben - die Dichtheitsprüfung zunehmend auf kleinere Lecks abgestellt wird, muß die Drosselbohrung des Referenzlecks im bekannten Diagnosemodul ebenfalls sehr klein gemacht werden, wodurch die Anfälligkeit des Referenzlecks gegen Verschmutzung und damit gegen Veränderung des Durchlaßquerschnitts wesentlich zunimmt und die Dichtheitsmessungen nicht mehr zuverlässig sind.

### Vorteile der Erfindung

Der erfindungsgemäße Diagnosemodul mit den kennzeichnenden Merkmalen des Anspruchs 1 hat demgegenüber den Vorteil, daß durch die Hintereinanderschaltung mehrerer Blenden mit jeweils einer Drosselöffnung der für die Referenzmessung zugelassene Volumenstrom mit relativ querschnittsgroßen Drosselöffnungen eingestellt wird, die anders als Drosselbohrungen mit sehr kleinen Bohrungsdurchmesser relativ unempfindlich gegen Verschmutzung, Ablagerungen, Verunreinigungen etc., sind. Daher kann auch auf die bei dem bekannten Diagnosemodul meist eingesetzten Filter vor und hinter dem Referenzleck verzichtet werden. Die querschnittsgroßen Drosselöffnungen sind fertigungstechnisch einfacher herzustellen als kleine, so daß robuste Stanzwerkzeuge eingesetzt werden können. Die Einflüsse von Stanztoleranzen sind ebenso unkritisch wie die Einflüsse unterschiedlicher Entgratungsgüte, da sie bezogen auf einen wesentlichen größeren Öffnungsquerschnitt weit weniger ins Gewicht fallen.

Versuche haben gezeigt, daß beispielsweise das mit drei hintereinander angeordneten Blenden ausgestattete erfindungsgemäße Referenzleck, dessen Drosselöffnungen einen Durchmesser von jeweils 1 mm aufweisen, den gleichen Durchfluß, d.h. den gleichen Fördervolumenstrom pro Zeiteinheit, zuläßt, wie eine einzige Drosselbohrung mit einem Durchmesser von 0,5 mm. Mit vier und mehr hintereinander angeordneten Blenden mit gleich großem Durchmesser der Drosselöffnungen kann die Durchflußmenge weiter reduziert werden, so daß mit dem erfindungsgemäßen Diagnosemodul auch die zukünftigen Forderungen nach Auffinden extrem kleiner Leckagen im Behältnis erfüllt werden können, ohne daß im Langzeitbetrieb der Diagnosemodul wegen Veränderungen des Referenzlecks ungenau mißt oder ganz ausfällt.

Durch die in den weiteren Ansprüchen aufgeführten Maßnahmen sind vorteilhafte Weiterbildungen und Verbesserungen des im Anspruch 1 angegebenen Diagnosemoduls möglich.

### Zeichnung

Die Erfindung ist anhand von in der Zeichnung dargestellten Ausführungsbeispielen in der nachfolgenden Beschreibung näher erläutert. Es zeigen:
- Fig. 1: ein Blockschaltbild eines Diagnosemoduls für eine Tankentlüftungsanlage eines Kraftfahrzeugs,
- Fig. 2 und 3: jeweils einen Längsschnitt eines Referenzlecks im Diagnosemodul gemäß Fig. 1 gemäß einem ersten und zweiten Ausführungsbeispiel,
- Fig. 4: einen Querschnitt eines dritten Ausführungsbeispiels des Referenzlecks in perspektivischer Darstellung.

### Beschreibung der Ausführungsbeispiele

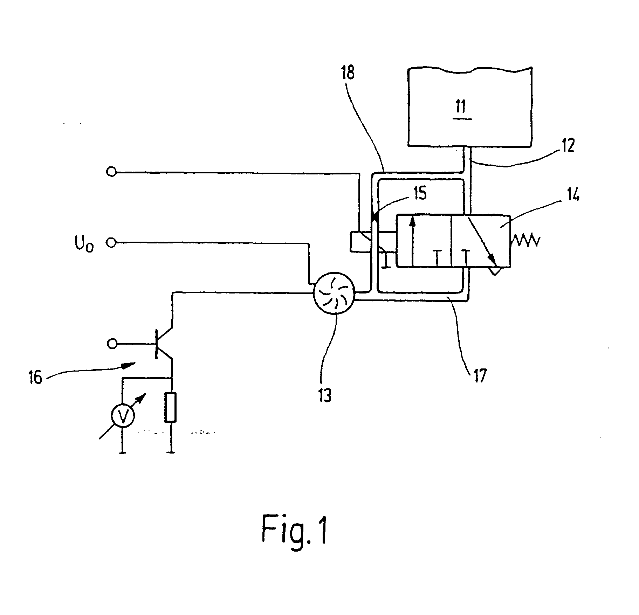

Das in Fig. 1 im Blockschaltbild dargestellte Diagnosemodul dient zur Prüfung der Dichtheit einer Tankentlüftungsanlage eines Kraftfahrzeugs als spezielles Ausführungsbeispiel für ein beliebiges Behältnis. Wie bekannt und beispielsweise in der DE 195 02 776 C1 beschrieben, umfaßt die Tankentlüftungsanlage neben dem Tank ein Adsorptionsfilter, das mit dem Tank über eine Tankanschlußleitung verbunden ist und eine mit der Umgebung verbundene Belüftungsleitung aufweist, sowie ein Tankentlüftungsventil, das einerseits mit dem Adsorptionsfilter über eine Ventilleitung und andererseits mit einem Saugrohr einer Brennkraftmaschine über eine weitere Ventilleitung verbunden ist. Durch Verdunstung entstehen in dem Tank Kohlenwasserstoffe, die sich in dem Adsorptionsfilter anlagern. Zur Regenerierung des Adsorptionsfilters wird das Tankentlüftungsventil geöffnet, so daß aufgrund des in dem Saugrohr herrschenden Unterdrucks Luft der Atmosphäre durch das Adsorptionsfilter gesaugt wird, wodurch die in dem Adsorptionsfilter angelagerten Wasserstoffe in das Saugrohr gesaugt und der Brennkraftmaschine zugeführt werden. Von dieser bekannten Tankentlüftungsanlage ist in Fig. 1 das Adsorptionsfilter ausschnittweise dargestellt und mit 11 bezeichnet.

Das Diagnosemodul ist an die Belüftungsleitung 12 des Adsorptionsfilters angeschlossen. Das Diagnosemodul weist eine elektrische Druckluftpumpe 13, die an einer Spannungsquelle U₀ angeschlossen ist, ein als 4/2-Wegemagnetventil ausgebildetes Umschaltventil 14, ein Referenzleck 15 sowie eine Meßschaltung 16 zur Messung der Stromaufnahme der Druckluftpumpe 13 als Maß für den von der Druckluftpumpe 13 geförderten Luftvolumenstrom auf. Das Umschaltventil 14 verbindet eine von der Druckluftpumpe 13 wegführende Druckluftleitung 17 mit der Belüftungsleitung 12 zum Adsorptionsfilter 11. Das zwei Schaltstellungen aufweisende Umschaltventil 14 ist so ausgebildet, daß in der in Fig. 1 gezeigten Grundstellung des Umschaltventils 14 die Druckluftleitung 17 abgesperrt und die Belüftungsleitung 12 entlüftet ist und in der Arbeitsstellung des Umschaltventils 14 die Druckluftleitung 17 mit der Belüftungsleitung 12 verbunden und die Entlüftungsöffnung des Umschaltventils 14 abgesperrt ist. Das Referenzleck 15 ist in einem Bypass 18 angeordnet, der die Druckluftleitung 17 unter Umgehung des Umschaltventils 14 mit der Belüftungsleitung 12 verbindet.

Die Druckluftpumpe 13 wird mittels eines Transistors 19 gesteuert. Zur Erfassung der Stromaufnahme der eingeschalteten Druckluftpumpe 13 weist die Meßschaltung 16 einen Meßwiderstand 20 auf, der im Emitterzweig des Transistors 19 eingeschaltet ist. Die am Meßwiderstand 20 abfallende Spannung, die mittels eines Spannungsmessers 21 erfaßt wird, ist ein Maß für die Stromaufnahme und damit für den Fördervolumenstrom der Druckluftpumpe 13.

Zur Dichtheitsprüfung wird die Druckluftpumpe 13 eingeschaltet und durch Umschalten des Umschaltventils 14 einerseits die Tankentlüftungsanlage und andererseits nur das Referenzleck 15 mit Druckluft beaufschlag. Ein Vergleich des von der Druckluftpumpe 13 geförderten Luftstroms in den beiden Schaltstellungen des Umschaltventils 14, der proportional den am Spannungsmesser 21 abgelesenen Meßgrößen ist, ermöglicht eine Feststellung über das Vorhandensein eines Lecks in der Tankentlüftungsanlage zu treffen. Ist die in der Arbeitsstellung des Umschaltventils 14 abgelesene Meßgröße am Spannungsmesser 21 größer als die in der Grundstellung des Umschaltventils 14 abgelesene Meßgröße, so weist die Tankentlüftungsanlage ein Leck auf, das größer ist als die zulässige Leckage, die durch das Referenzleck 15 bestimmt ist. Damit erfolgt aufgrund der Diagnose eine Schlechtaussage über die Dichtheit. Im anderen Fall erfolgt eine Gutaussage, d.h., daß die Dichtheit der Tankentlüftungsanlage gegeben ist.

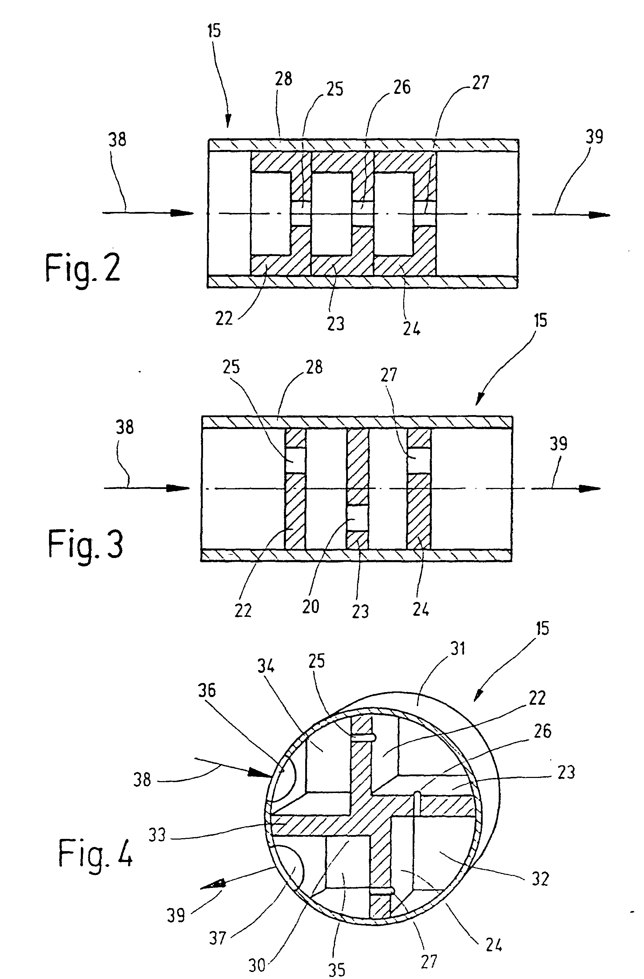

Den Schwellwert für die Gut-/Schlecht-Aussage gibt das Referenzleck 15 vor, das entsprechend der zugelassenen Leckage in der Tankentlüftungsanlage zu bemessen ist. Soll bereits ein Leck von 0,5 mm Durchmesser in der Tankentlüftungsanlage erkannt werden, so muß das Referenzleck 15 entsprechend eingestellt werden. Um hier nicht ebenfalls eine dem zugelassenen Leck entsprechende, extrem kleine Drosselbohrung im Referenzleck 15 vorzusehen zu müssen, ist das Referenzleck 15, wie dies in Fig. 2 und 3 vergrößert dargestellt ist, aus mehreren in Strömungsrichtung hintereinander angeordnete Blenden 22 - 24 zusammengesetzt, die jeweils eine Drosselöffnung 25 - 27 aufweisen. Die Blenden 22 - 24 sind in Fig. 3 scheibenförmig ausgebildet und in einer Hülse 28 mit Abstand voneinander angeordnet. Zur vereinfachten Montage des Referenzlecks 15 können die Blenden 22 - 24 auch - wie dies in Fig. 2 dargestellt ist - tassenförmig ausgebildet werden und in Axialrichtung aneinander anliegen, wobei die Tassenhöhe den Axialabstand der Blenden 22 - 24 voneinander bestimmt an der Hülse 28 ist vor der ersten Blende 22 ein Zulauf 38 und hinter der dritten Blende 24 ein Ablauf 39 für den Luftstrom ausgebildet. Zu- und Ablauf 38,39 sind in Fig. 2 und 3 symbolisch durch Pfeile angedeutet. In Fig. 2 sind die Drosselöffnungen 25 - 27 in den Blenden 22 - 24 so angeordnet, daß ihre Öffnungsachsen in Strömungsrichtung weisen und miteinander fluchten. Im Ausführungsbeispiel der Fig. 3 sind die ebenfalls in Strömungsrichtung weisenden Öffnungsachsen der Drosselöffnungen 25 - 27 parallel zueinander versetzt. Besitzen alle Drosselöffnungen 25 - 27 in den Blenden 22 - 24 beispielsweise einen Durchmesser von 1 mm, so ergibt sich ein Durchfluß pro Zeiteinheit, wie er sich bei einem Referenzleck mit einer einzigen Drossebohrung entspricht, die einen Durchmesser von 0,5 mm hat, einstellt. Dies bedeutet, daß durch die Reihenschaltung der drei Blenden 22 - 24 zur Erzielung eines relativ kleinen Referenzlecks die Drosselöffnungen 25 - 27 im Durchmesser recht groß gemacht werden können. Querschnittsgroße Drosselöffnungen sind gegen-Verschmutzung und Ablagerungen wesentlich weit wenig empfindlich als querschnittskleine Drosselöffnungen. Auch sind sie weniger kritisch gegenüber Fertigungstoleranzen, wie Stanz- oder Entgratungsgüte.

Das in Fig. 4 perspektivisch im Querschnitt dargestellte Referenzleck 15 arbeitet nach dem gleichen Grundprinzip mit drei hintereinander angeordneten Blenden 22 - 24, die einzeln jeweils wiederum eine querschnittsgrößere Drosselöffnung 25 - 27 aufweisen als sie dem in der Tankentlüftungsanlage maximal zugelassenen Leck entspricht. Die Blenden 22 - 24 sind an einem Strangprofilabschnitt 30 ausgebildet, der in ein zylinderförmiges Gehäuse 31 axial eingesetzt ist. Das Gehäuse 31 kann selbstverständlich auch kastenförmig ausgebildet werden. Die beiden Stirnseiten des Gehäuses 31 sind durch Deckel verschlossen, von denen in Fig. 4 nur der Stirndeckel 32 zu sehen ist. Die von der Gehäuseachse bis zu den Gehäusewänden reichenden Blenden 22 - 24 sind rechtwinklig zueinander angeordnet. Eine vierte, zu den Blenden 22 - 24 ebenfalls rechtwinklig ausgerichtete Wand 33, die ebenfalls am Strangprofilabschnitt 30 ausgebildet ist und von der Gehäuseachse bis zu der Gehäusewand reicht, dient-zur Trennung einer Zulaufkammer 34 von einer Abströmkammer 35, die vor der ersten Blende 22 bzw. hinter der letzten Blende 24 ausgebildet ist. Das Gehäuse 31 weist im Bereich der beiden Kammern 34,35 jeweils eine Anschlußöffnung 36 bzw. 37 zum Einbinden der Drosselblende in den Bypass 18 auf. Wie bei den Ausführungsbeispielen in Fig. 2 und 3 bilden Anschlußöffnungen 36 und Zulaufkammer 34 den Zulauf 38 und Abströmkammer 35 und Anschlußöffnung 37 den Ablauf 39 des Referenzlecks 15. Die Anschlußöffnngen 36,37 sind so gelegt, daß die Achsen von Zu- und Ablauf 38,39 etwa rechtwinklig oder unter einem kleinen spitzen Winkel geneigt zur Achse des Strangprofilabschnitts 30 ausgerichtet sind. Die Anordnung der Drosselöffnungen 25 - 27 entspricht etwa der Anordnung der Drosselöffnungen 25 - 27 in Fig. 3, d.h. ihre Öffnungsachsen fluchten nicht miteinander, liegen also nicht auf einem zur Gehäuseachse konzentrischen Kreisbogen, sondern sind dazu parallel in Radialrichtung versetzt. Die Wirkungsweise des Referenzlecks 15 in Fig. 4 ist identisch mit der des zuvor beschriebenen Referenzlecks gemäß Fig. 2 und 3.

## Patentansprüche

1. Diagnosemodul zur Prüfung der Dichtheit eines Behältnisses, insbesondere einer Tankentlüftungsanlage eines Kraftfahrzeugs, mit einem von einem Volumenstrom durchströmbaren, auf die zulässige Leckage des Behältnisses abgestimmten Referenzleck (15), **dadurch gekennzeichnet, daß** das Referenzleck (15) von mehreren, in Strömungsrichtung hintereinander angeordneten Blenden (22-24) gebildet ist, die jeweils eine Drosselöffnung (25-27) aufweisen.

2. Diagnosemodul nach Anspruch 1, **dadurch gekennzeichnet, daß** die Drosselöffnung (25-27) in den Blenden (22-24) so angeordnet sind, daß ihre Öffnungsachsen in Strömungsrichtung weisen und miteinander fluchten.

3. Diagnosemodul nach Anspruch 1, **dadurch gekennzeichnet, daß** die Drosselöffnungen (25-27) der Blenden (22-24) so angeordnet sind, daß ihre Öffnungsachsen in Strömungsrichtung weisen und zueinander quer zur Strömungsrichtung versetzt sind.

4. Diagnosemodul nach Anspruch 2 oder 3, dadurch gekennzeichent, daß die Blenden (22-24) scheiben- oder tassenförmig ausgebildet und mit Axialabstand in einer Hülse (28) angeordnet sind, an deren beiden Stirnseiten jeweils ein Zulauf (38) und Ablauf (39) für den Volumenstrom vorgesehen sind.

5. Diagnosemodul nach Anspruch 3 oder 4, **dadurch gekennzeichnet, daß** die Strömungsrichtung und die Fluchtlinie der Achsen der Drosselöffnungen (25-27) bogenförmig, vorzugsweise halbkreisförmig, oder abgewinkelt verlaufen.

6. Diagnosemodul nach Anspruch 5, **dadurch gekennzeichnet, daß** die Blenden (22-24) an einem Strangprofilabschnitt (30) ausgebildet sind, der in einem Gehäuse (31) eingesetzt ist, und daß das Gehäuse (31) einen Zu- und Ablauf (38,39) aufweist, deren Achsen etwa rechtwinklig zur Achse des Strangprofilabschnitts (30) ausgerichtet sind.

7. Diagnosemodul nach einem der Ansprüche 4 - 6, **dadurch gekennzeichnet, daß** der Zulauf (38) an dem Ausgang einer Druckluftförderpumpe (13) angeschlossen ist, deren Betriebskenngrößen, z.B. Stromaufnahme, als Maß für die zulässige Leckage verwendet wird.

## Claims

1. Diagnostic module for testing the leak-tightness of a container, in particular of a tank ventilation system of a motor vehicle, with a reference leak (15) through which a volume flow is capable of flowing and which is coordinated with the permissible leakage of the container, **characterized in that** the reference leak (15) is formed by a plurality of diaphragms (22-24) which are arranged one behind the other in the direction of flow and each have a throttle orifice (25-27).

2. Diagnostic module according to Claim 1, **characterized in that** the throttle orifices (25-27) in the diaphragms (22-24) are arranged in such a way that their orifice axes point in the direction of flow and are in alignment with one another.

3. Diagnostic module according to Claim 1, **characterized in that** the throttle orifices (25-27) of the diaphragms (22-24) are arranged in such a way that their orifice axes point in the direction of flow and are offset to one another transversely to the direction of flow.

4. Diagnostic module according to Claim 2 or 3, **characterized in that** the diaphragms (22-24) are of disc-shaped or cup-shaped design and are arranged at an axial distance from one another in a sleeve (28), on the two end faces of which an inflow (38) and an outflow (39) for the volume flow are provided in each case.

5. Diagnostic module according to Claim 3 or 4, **characterized in that** the direction of flow and the alignment of the axes of the throttle orifices (25-27) run arcuately, preferably semicircularly, or in an angled manner.

6. Diagnostic module according to Claim 5, **characterized in that** the diaphragms (22-24) are formed on an. extruded-profile portion (30) which is inserted in a housing (31), and **in that** the housing (31) has an inflow and outflow (38, 39), the axes of which are oriented approximately at right angles to the axis of the extruded-profile portion (30).

7. Diagnostic module according to one of Claims 4-6, **characterized in that** the inflow (38) is connected to the outlet of a compressed-air feed pump (13), of which the operating characteristics, for example current consumption, are used as a measure of the permissible leakage.

## Revendications

1. Module de diagnostic pour contrôler l'étanchéité d'un contenant, notamment de l'installation de dégazage du réservoir d'un véhicule automobile, comportant un passage de fuite de référence (15) accordé à la fuite admissible que peut présenter le contenant, et qui peut être traversé par un courant volumique,
**caractérisé en ce que**
le passage de fuite de référence (15) est constitué de diaphragmes (22 à 24) faisant suite dans la direction d'écoulement et qui sont percés chacun d'une ouverture d'étranglement.

2. Module de diagnostic selon la revendication 1,
**caractérisé en ce que**
les ouvertures d'étranglement (25 à 27) dans les diaphragmes (22 à 24) sont disposées de manière que leurs axes sont alignés selon la direction d'écoulement.

3. Module de diagnostic selon la revendication 1,
**caractérisé en ce que**
les ouvertures d'étranglement (25 à 27) des diaphragmes (22 à 24) sont disposées de manière que leurs axes sont orientés selon la direction d'écoulement en étant décalés transversalement par rapport à cette direction.

4. Module de diagnostic selon l'une quelconque des revendications 2 ou 3,
**caractérisé en ce que**
les diaphragmes (22 à 24) ont la forme de disques ou de tasses et sont montés espacés axialement dans une douille (28) présentant sur chacune de ses faces frontales, une entrée (38) et une sortie (39) pour le courant volumique.

5. Module de diagnostic selon l'une quelconque des revendications 3 ou 4,
**caractérisé en ce que**
la direction d'écoulement et la ligne sur laquelle se trouvent les axes des ouvertures d'étranglement (25 à 27) est courbe, de préférence en forme de demi-cercle, ou elle est coudée.

6. Module de diagnostic selon la revendication 5,
**caractérisé en ce que**
les diaphragmes (22 à 24) sont réalisés sur une section d'un profilé étiré (30), insérée dans un boîtier (31) qui présente une entrée (38) et une sortie (39) dont les axes sont à peu près perpendiculaires à l'axe de la section de profilé étiré (30).

7. Module de diagnostic selon l'une quelconque des revendications 4 à 6,
**caractérisé en ce que**
l'entrée (38) est raccordée à la sortie d'une pompe (13) refoulant de l'air comprimé et dont une caractéristique de fonctionnement, par exemple la consommation de courant, est utilisée comme mesure de la fuite admissible.
